# EUROPÄISCHE PATENTSCHRIFT

(11) **EP 1 644 170 B1**
(45) Veröffentlichungstag und Bekanntmachung des Hinweises auf die Patenterteilung: **23.03.2011**
(21) Anmeldenummer: 04763121.3
(22) Anmeldetag: 07.07.2004
(51) Int. Cl.: B29B 17/00, E04C 2/10, E04C 2/20, D21D 1/30, B02C 7/00, D21B 1/14, B27N 1/00, B27N 3/00

(54) **VERFAHREN ZUR HERSTELLUNG EINES FASERSTOFFES**
METHOD FOR PRODUCING A FIBROUS MATERIAL
PROCEDE DE PRODUCTION DE MATIERE FIBREUSE

(30) Priorität: 07.07.2003 DE 10330756; 22.06.2004 DE 102004030509
(43) Veröffentlichungstag der Anmeldung: 12.04.2006
(73) Patentinhaber: CVP Clean Value Plastics GmbH, 21614 Buxtehude (DE)
(72) Erfinder: HOFMANN, Michael, 21614 Buxtehude (DE); HOLM, Andreas, 27356 Rotenburg (Wümme) (DE); VENSCHOTT, Dirk, 38102 Braunschweig (DE)
(74) Vertreter: Hauck Patent- und Rechtsanwälte
(86) Internationale Anmeldenummer: PCT/EP2004/007457
(87) Internationale Veröffentlichungsnummer: WO 2005/002817

(56) Entgegenhaltungen:
- EP-A- 0 588 023
- DE-A- 4 444 532
- DE-A- 10 128 549
- US-A- 5 154 361
- US-A- 5 958 554
- US-B1- 6 322 737
- PATENT ABSTRACTS OF JAPAN Bd. 1998, Nr. 09, 31. Juli 1998 (1998-07-31) & JP 10 100321 A (AIN KOSAN KK), 21. April 1998 (1998-04-21)
- PATENT ABSTRACTS OF JAPAN Bd. 2000, Nr. 23, 10. Februar 2001 (2001-02-10) & JP 2001 170932 A (MURAKAMI KIYOSHI), 26. Juni 2001 (2001-06-26)

## Beschreibung

Die Erfindung bezieht sich auf ein Verfahren zur Herstellung eines Faserstoffes nach dem Patentanspruch 1.

In der älteren Patentanmeldung DE 103 26 181 ist beschrieben, bei der Herstellung von Holzwerkstoffplatten, d.h. insbesondere Holzspan- und Holzfaserplatten, einen Teil der Holzspäne oder -fasern durch gemahlenes oder zerfasertes Agglomerat aus Mischkunststoffen aus der Abfallentsorgung zu substituieren. Die Größen der Kunststoffpartikel einerseits und der Holzfasern oder -späne andererseits sind annähernd gleich. Auf diese Weise ist eine Möglichkeit einer vollständigen stofflichen Verwertung von Mischkunststoffen geschaffen.

Bei derzeit bestehenden Sammelsystemen für Abfallkunststoffe, z.B. Verpackungsmaterial aus Privathaushalten, Joghurtbecher, Schutzhüllen, Einkaufstüten, Flaschen für Reinigungsmittel, Zahnpastatuben usw. werden zumeist Mischkunststoffe erhalten. Sie umfassen neben den üblichen Folien und Kunststoffen aus LDPE, HDPE oder PP oft Folienreste aus Polyamiden, Polycarbonaten, PET oder anderen Kunststoffen. Die quantitative Mengenverteilung der verschiedenen Kunststoffe, die Aufbereitungs- und Sortierbetrieben von Sammelunternehmen übergeben werden, hängt unter anderem vom Sammelverhalten und Qualitätsbewußtsein der Bevölkerung ab. Trotz fortgeschrittener Sortierung läßt sich eine vollständige Trennung der verschiedenen Kunststoffsorten nicht erreichen. Eine sortenreine Trennung zwischen LDPE-Folien von HDPE-Folien läßt sich mit einer Quote von annähernd 95 % erreichen. Daneben existieren jedoch auch Sammelsysteme ausschließlich für LDPE und HDPE-Kunststoffe, bei denen überwiegend Kunststoffolien, die über einen Folienkalander hergestellt werden, gesammelt werden.

Folien- oder Flaschenfraktionen aus Sammelsystemen werden nach einer optionalen Reinigung und Vorsortierung zerkleinert zu Flakes oder Schnipseln. Um eine ausreichende Transportschüttdichte zu erzielen, werden die Flakes oder Schnipsel in einem sogenannten Agglomerierprozeß zu einem körnigen Gut aufbereitet. Das körnige Gut ist je nach Reinheit und Sortierung sehr gleichmäßig (bei hohem Reinhaltungsgrad der Kunststoffsorten) oder es hat eine sehr ungleichmäßige Struktur sowohl von der Erscheinung als auch von der Konsistenz und der Geometrie des Agglomerats her (hohe Durchmischung verschiedenster Kunststoffsorten von unterschiedlichen Herkunftsquellen, z.B. Mischkunststoffe aus Haushaltssammelsystemen). Bei der Aufbereitung, dem erwähnten Agglomerieren, werden die Flakes oder Schnipsel in einem Rührwerk durch Reibung so erwärmt, daß sie anschmelzen. Durch das in Intervallen durchgeführte Absprühen des erhitzten Agglomerats mit kaltem Wasser entweicht ein Teil der organischen Bestandteile über den Wasserdampf. Gleichzeitig kühlen die angeschmolzenen Folienstücke ab und agglomerieren zu schüttfähigen granulatartigen Gebilden. Das Agglomerat hat eine verhältnismäßig hohe Schüttdichte und ist sehr gut transportierbar. Agglomerierverfahren sind etwa in AT 343445 oder DE 198 O1 286 C1 beschrieben.

Bei der Substitution von Holzspänen oder -fasern durch Kunststoff ist zu fordern, daß die Kunststoffpartikel in ihrer geometrischen Form und Größe den substituierten Holzpartikeln von Span- oder Faserplatten ähneln, um mit herkömmlichen Holzwerkstoffplatten ähnliche Ergebnisse zu erzielen. Bei Faserwerkstoffen sollte daher der Faseranteil überwiegen und bei Spanwerkstoffen der Spananteil.

Das allgemein erzeugte Agglomerat liegt in verschiedensten Formen und Größen vor, ist daher als Rohstoff bei der Herstellung von Holzwerkstoffen ungeeignet, da sich beim Durchmischen wegen der unterschiedlichen Größen der Fraktionen ein starkes Entmischungsverhalten zeigt. Plattenwerkstoffe, die mit diesen beiden Fraktionen hergestellt werden, weisen aufgrund lokaler Agglomeratansammlungen zumeist an der Werkstückoberfläche ein ungleichmäßiges Oberflächenbild auf und machen die unzureichende Durchmischung beider Fraktionen sichtbar. Zudem ist aufgrund der unzureichenden Durchmischung die Ausbildung eines durchgängigen Kunststoff-Kunststoff- bzw. Kunststoff-Holz-Gefüges mit einer homogenen Gefügestruktur nicht gewährleistet. Außerdem sind die gewünschten mechanischen Eigenschaften, wie z.B. Querzugfestigkeit, Biegefestigkeit und auch Verhalten bei Feuchte, wie Quellverhalten und Wasseraufnahme, nicht erreichbar.

Wie in der älteren Patentanmeldung bereits beschrieben, wird daher zerkleinertes Agglomerat eingesetzt, wofür verschiedene Mahltechnologien verwendet werden können. Für den Hersteller von Holzwerkstoffen, der auch gemahlenes Kunststoffagglomerat einsetzen will, bleibt nur übrig, entweder gemahlenes Kunststoffagglomerat von dritter Seite zu beziehen oder in eine aufwendige Mahleinrichtung zu investieren.

Eine ähnliche Problematik ergibt sich bei Herstellern, die Werkstoffe aus anderen Faserstoffen herstellen, z.B. aus Pflanzenfasern, wie aus Flachs oder Hanf oder auch aus Glas oder Carbonfasern. Sollen diese Fasern mit Fasern aus Recycling-Kunststoff gemischt werden zur Herstellung eines entsprechenden Faserwerkstoffs, müßte das Kunststoffagglomerat entweder vom Hersteller selbst vermahlen werden, was eine geeignete Mahleinrichtung erfordert oder gemahlen von dritter Seite bezogen werden, was ebenfalls einen relativ hohen Aufwand erfordert.

Aus US 5,154,361A ist ein Verfahren zum Zerkleinern von Kunststoffteilen bekannt geworden, bei dem eine Suspension der Kunststoffteilchen in Wasser zusammen mit einem Anti-Schaummittel durch einen Scheibenrefiner geschickt wird. In einem Beispiel enthält die Suspension 3 % Feststoffe. Der Suspension können auch Zellulosefasern zugemischt werden.

Aus EP 0 588 023A ist ein Verfahren zur Herstellung eines Verbundkörpers bekannt geworden, bei dem als Ausgangsmaterial mit Kunststoff beschichtete Verbundmaterialien, vorzugsweise Papier oder Karton, verwendet werden. Die Verbundmaterialien werden zu Partikeln zerkleinert, und anschließend wird die Masse auf mindestens Schmelztemperatur des Kunststoffes der Verbundmaterialien erwärmt und unter Druck miteinander verbunden. Aus der gartungsbildenden DE 101 28 549 ist bekannt geworden. Formkörper aus Naturfasern oder -Spänen dadurch herzustellen, dass ein Kunststoffpolymer als Bindemittel zugesetzt wird. Das Formteil wird durch Extrusion hergestellt. Aus EP-A-0082295 ist bekannt geworden, Kunststoffteilchen zerkleinern, und zwar zu 95 % kleiner als 20 US Mesh. Dies entspricht einer Maschenweite von weniger als 0.853 mm. Als Vorrichtung, mit der diese Zerkleinerung erzielt wird, wird eine Kryo-Mühle angegeben.

Der Erfindung liegt die Aufgabe zugrunde, ein Verfahren zur Herstellung eines Faserstoffes für die Fertigung von Formteilen anzugeben, bei dem der Aufwand für den Einsatz von zerfasertern oder gemahlenem Recycling-Kunststoff deutlich verringert wird.

Diese Aufgabe wird durch die Merkmale des Patentanspruchs 1 gelöst.

Bei der Erfindung wird in bekannter Weise einer Partikel- oder Fasermasse einer ersten Gruppe von Partikeln oder Fasern ein Anteil von Kunststoffpartikeln und/oder Kunststoffasern mit einer Teilchengröße annähernd der der Partikel oder Fasern der ersten Gruppe zugemischt, anschließend wird ein Bindemittel zugegeben. Erfindungsgemäß werden die Kunststoffpartikel und/oder Kunststoffasern durch Zerkleinern und/oder Zerfasern von Rein- und/oder Mischkunststoffagglomeraten in einem Scheibenrefiner gewonnen werden. Hierbei wird dem Scheibenrefiner während des Zerkleinerungsvorgangs Wasser als Schmiermittel zugeführt werden. Scheibenrefiner sind herkömmliche Vorrichtungen, wie sie in der Holzwerkstoff-Industrie zur Zerfaserung von größeren Holzpartikeln bzw. Holzhackschnitzeln umfangreich Verwendung finden (s. Holz-Lexikon, 3. Auflage, Band 2, Seiten 580-584). Die Größe der zerkleinerten Kunststoffpartikel wird durch den Abstand der Scheiben eingestellt. Bei gröberem Agglomerat erfolgt gegebenenfalls eine stufenweise Zerkleinerung durch stufenweises Verringern der Scheibenabstände im Refiner.

Bei der Zerkleinerung von Kunststoff im Refiner wird zu Kühlungszwecken Wasser zugegeben Dadurch wird verhindert, daß während des Zerkleinerungsprozesses der Kunststoff anschmilzt und auf den Scheibenflächen verschmiert. Das Wasser wirkt außerdem als Gleit- und Schmiermittel zwischen den Refinerscheiben.

Folienwerkstoffe weisen überwiegend eine lineare Molekülorientierung auf, die durch Streck- bzw. Dehnprozesse bei der Herstellung hervorgerufen wird, z.B. bei Polyethylen- oder Polypropylenfolien. Dies hat zur Folge, daß Agglomerate aus diesem Ausgangskunststoff sich bevorzugt in einer Richtung, nämlich der ursprünglichen Vorzugsrichtung, leichter trennen lassen. Der Zerkleinerungsprozeß von agglomerierten Reinkunststoffagglomeraten im Refiner macht sich diese Eigenschaft zunutze und ermöglicht mit der radialen Rillenähnlichen Struktur der Refinerscheiben, das überwiegend längliche, faserartige Erscheinungsbild der zerfaserten niedrigschmelzenden Reinkunststoffagglomerate. Durch Veränderung des Scheibenabstandes im Refiner wird eine relativ genau definierte Fasergröße erreicht. Somit ist es möglich, die Fasergröße des Agglomeratkunststoffes der Größe der Holzfasern anzupassen, um für den weiteren Herstellungsprozeß eine homogene Gefügestruktur zu erzielen.

Mit dem erfindungsgemäßen Verfahren lassen sich auch Mischkunststoffagglomerate zerkleinern. Dabei werden die Mischkunststoffpartikel durch die Bearbeitung im Refmer anteilig zu Partikeln einerseits und zu Fasern andererseits von definierter Größe zerkleinert. Der Anteil der Fasern einerseits und der Partikel andererseits variiert naturgemäß in Abhängigkeit von der Zusammensetzung des Mischkunststoffagglomerates. Je höher der Folienkunststoffanteil im Agglomerat ist, desto größer ist auch der Anteil an Kunststoffasern, die aus dem Refiningprozeß resultieren.

Der Hersteller von Holzwerkstoffen bzw. Formteilen aus Holzwerkstoff, wie Platten oder sonstige Gegenstände kann daher mit Hilfe bereits vorhandener apparativer Vorkehrungen den Recycling-Kunststoff im agglomerierten Zustand mit eigenen Mitteln so weit aufbereiten, daß er den gewünschten Substitutionswerkstoff zur Herstellung der Formteile zur Verfügung hat. Die Verwertungsquote von agglomerierten Recyclingkunststoffen ist zur Zeit noch relativ niedrig, da bisher kaum sinnvolle Anwendungen für diese existieren. Der Grund hierfür ist, daß Mischkunststoffe zumeist Stoffinhalte aufweisen, die überhaupt nicht aufschmelzen. Selbst bei hohen Temperaturen ergibt sich häufig nur eine zähfließende Masse, die auch bei steigender Erwärmung nicht dünnflüssig wird. Andererseits enthalten Mischkunststoffe Sorten, die bereits bei 105 bis 115 °C schmelzen. Wird dieser Schmelzpunkt überschritten, zersetzen sich diese Kunststoffe zu Kohlenstoff unter Ausgasung von Kohlendioxid und Wasser.

Das erfindungsgemäße Verfahren ist nicht beschränkt auf die Anwendung auf Holzwerkstoffe, sondern ist beim Einsatz von anderen Faserrohstoffen, z.B. aus Flachs, Hanf, Glas oder Carbonwerkstoffen gleichermaßen vorteilhaft.

Voraussetzung für das erfindungsgemäße Verfahren ist ein Scheibenrefiner, mit dessen Hilfe Kunstfasermaterial in exakt einstellbarer Größe ohne zusätzliche Mahleinrichtungen hergestellt werden kann, z.B. in der Produktion von Holzwerkstoff-platten mit Kunststoffanteilen oder von sonstigen Formteilen aus Faserwerkstoffen mit Kunststoffanteilen.

Nach einer Ausgestaltung der Erfmdung ist es vorteilhaft, wenn die aus dem Refiner kommenden Kunststoffpartikel oder -fasern im Anschluß getrocknet werden. Die Trocknung kann in industrieüblichen Trocknungseinrichtungen erfolgen, die ebenfalls in Produktionsanlagen zur Herstellung von Holzwerkstoffen zur Verfügung stehen.

Es mag vorteilhaft sein, Kunststoffagglomerat allein im Scheibenrefiner zu zerkleinern bzw. zu zerfasern. Es ist jedoch ebenso gut denkbar, eine Mischung aus gröberen Holzpartikeln (Hackschnitzel) und Kunststoffagglomerat in einem Arbeitsgang im Scheibenrefiner zu zerkleinern. Auf diese Weise wird für das Holz sowohl wie für den Kunststoff eine annähernd gleiche Partikelgröße erhalten. Zusätzlich wird eine gute Durchmischung des Kunststoffs mit den Holzpartikeln erreicht.

Nachstehend einige Beispiele für einen Faserwerkstoff, der nach dem erfindungsgemäßen Verfahren hergestellt worden ist sowie für das erfindungsgemäße Verfahren.

### Beispiel 1:

Zerfaserung von Reinkunststoffen in einem Scheibenrefiner
Kunststoffrohstoff: niedrigschmelzendes Reinkunststoffagglomerat aus Folienresten, Korngröße < 10mm
Kühl- und Schmiermittel: Wasser, Temperatur 10°C, 300 % Anteil bezogen auf Menge Kunststoffagglomerat

### Beispiel 2:

Zerkleinerung von Mischkunststoffagglomeraten und Holzpartikeln in einem Scheibenrefiner
Holzrohstoff: Holzpartikel, spanförmig, Länge bis 10 mm, Holzfeuchte ca. 6 % Kunststoffrohstoff: Mischkunststoffagglomerat, Korngröße < 10mm
Kühl- und Schmiermittel: Wasser, Temperatur 10°C, 300 % Anteil bezogen auf Menge Holzpartikeln Kunststoffagglomerat

Das Agglomerat kann trotz der vorangegangenen Aufbereitung gleichwohl noch organische Verunreinigungen enthalten, zum Beispiel Joghurtreste.

Daher ist angestrebt, ein Verfahren zu schaffen, bei dem Faserstoffe aus Kunststoff einen ausreichend hohen Reinheitsgrad aufweisen.

Bevor der Zerkleinerungsprozeß beginnt, wird zumindest die Agglomerat-Fraktion einem Kochprozeß unterworfen und es werden anhaftende Verunreinigungen entfernt. Der Heißdampfkocher wird mit Temperaturen von 100° bis 180°C und vorzugsweise mit einem Überdruck von 1 bis 4 bar betrieben, wobei die Kochzeit nach einer Ausgestaltung der Erfindung 3 bis 10 Minuten betragen kann.

Aufgrund der feucht-heißen Atmosphäre in Kochern werden die dem Agglomerat noch anhaftenden organischen Verunreinigungen gelöst und über das Abwasser nach dem Kochvorgang abgesondert. Das Abwasser kann in einer biologischen Kläranlage geklärt, eingedampft und verbrannt oder als Dampf direkt in die Verbrennungsanlage gegeben werden. Nach dem Kochprozeß gelangt das gereinigte Agglomerat - bzw. eine Mischung aus zum Beispiel Holzhackschnitzeln und Agglomerat - über eine Stopf- oder Speiseschnecke zum Refiner. Der Anteil von Agglomerat bewegt sich im Bereich von 0 bis 95 % bezogen auf die Gesamtmasse, wobei vorzugsweise der Rest von Holzhackschnitzeln oder Spänen gebildet wird. Wie erwähnt, kann auch reines Agglomerat in den Kocher und/oder den Refiner gegeben werden.

Durch die erwähnte Kochbehandlung wird eine Sterilisation des Agglomerats erhalten. Beispielsweise durch den Agglomeratprozeß veränderte Kohlehydrat- und Eiweißverbindungen werden durch den Kochprozeß herausgelöst und abgebaut.

Das im Refiner zerkleinerte Material wird auf eine gewünschte Endfeuchte getrocknet. Nach einer Ausgestaltung der Erfindung wird das feuchte Gut mittels eines kontinuierlich umlaufenden unter innerem Überdruck stehenden Heißdampfstroms getrocknet, wofür ein sogenannter an sich bekannter Heißdampf-Fasertrockner mit einer Temperatur von ca. 180°C Verwendung finden kann. Während der Verweilzeit im Trockner (Trocknerrohr) werden die im Refiner zerkleinerten Fasern auf die gewünschte Endfeuchte getrocknet. Der umgewälzte Heißdampfstrom wird wieder zurückgeführt, nachdem er vorzugsweise in einem Wärmeübertrager erhitzt worden ist. Durch die Rückführung des Heißdampfstromes werden sehr kleine Teile (Stäube) wieder dem Trockner zurückgeführt. Im Refiner kann bis zu 20 % Feinanteil aus dem Agglomerat entstehen, das teilweise durch den Heißdampfstrom ausgetragen wird. Wird der Feinanteil im Zyklus zurückgeführt, kommt es zu einer Vergütung des Fasergutes derart, daß sich der Feinanteil des Agglomerats mit den Holzfasern verbindet. Dies führt zu einer Hydrophobierung der Holzfasern sowie zu einer Beleimung der Fasern mit dem Agglomerat-Feinanteil. Dadurch geht bei der Trocknung der Feinanteil nicht verloren, sondern wird mitverwendet und, wie erwähnt, führt zu einer Verbesserung des Fasergemisches, weil sonstiger Leimanteil eingespart werden kann. Außerdem entfällt die Entsorgung der Feinteile. Würde das beschriebene Verfahren nicht verwendet, würde es zu einer Entmischung von Fasern und Feinanteilen kommen. Aufgrund der unterschiedlichen Partikelgrößen würde das gemahlene Agglomerat aus den Faserbündeln herausrieseln.

In Abhängigkeit von der Zusammensetzung des verwendeten Agglomerates, entsteht durch den beschriebenen Refinerprozeß eine Mischung aus zerfaserten Agglomerat und gemahlenem Agglomerat. LDPE-Anteile, beispielsweise aus längsgereckten Folien, im Agglomerat führen im Refinerprozeß aufgrund ihres Aufbaus zu faserartigem Material. Werden beispielsweise Reinfolienagglomerate mit ausschließlich PE-Anteilen im Refiner zerkleinert, entsteht vorwiegend Fasergut.
Anteile an quervemetzen Kunststoffen, z.B. HDPE, PP oder PET im Agglomerat werden im Refiner eher zu Mahlgut zerkleinert. Ist zuviel Mahlgut im Herstellungsprozeß für Formteile, beispielsweise Holzwerkstoffplatten unerwünscht, so kann es auch durch einen Siebprozeß, z.B. ein Windsichtungsverfahren, ausgesiebt werden. Die durch den Refinerprozeß entstehende Mischung aus Fasern und Mahlgut hat zudem noch folgende Ursachen: Werden die Agglomeratpartikel von den Lamellen der Refmerscheiben parallel zu Reckrichtung des ursprünglichen Kunststoffes zerkleinert, entstehen Agglomeratfasern. Werden die Agglomeratpartikel von den Lamellen der Refinerscheiben quer zur Reckrichtung des ursprünglichen Kunststoffes zerkleinert, entsteht ein Mahlgut.

Werden Holzhackschnitzel und Agglomerat im herkömmlichen Refinerprozeß gemeinsam zerfasert, lassen sich aufgrund des zuletzt beschriebenen Verfahrens aus dem entstehenden Fasergut auch ohne Zugabe zusätzlicher Bindemittel Holzwerkstoff-Formteile, beispielsweise Platten, auf den industrieüblichen diskontinuierlichen oder kontinuierlichen Holzwerkstoffproduktionsanlagen produzieren.

Das nach dem erfindungsgemäßen Verfahren erzeugte Fasergut kann auch zur Herstellung von Dämmstoffplatten mit Holzfaseranteil in einem aerodynamischen Vlies- bzw. Faserlegungsverfahren eingesetzt werden, wobei auf die Zugabe von sogenannten Kernmantelfasern, sogenannten BiCo-Fasern (Zwei-Komponentenfasern, Polypropylenfasern mit niedrig schmelzendem Mantel und höher schmelzendem Kern) als Bindemittel verzichtet werden kann. Weiteres Bindemittel muß nicht zugegeben werden. Verfahren mit aerodynamischer Vliesbildung sind beispielsweise in AT 207674 beschrieben worden. Ein Prozeß zur Herstellung von Dämmstoffplatten mit Bindemittelfaseranteil mit aerodynamischer Vliesbildung und Durchwärmung des Faservlieses in einem Durchströmungsofen ist aus der DE 100 56 829 A1 bekannt geworden.

Durch den Einsatz von gekochtem und refinertem Agglomerat anstatt der Kernmantelfasern lassen sich kostengünstige Dämmstoffplatten in einem Rohdichtebereich von 60 - 300 kg/m³ ohne weitere Zugabe von zusätzlichen Bindemittelfasern herstellen. Werden die hochreinen Agglomeratfasern für die Dämmstoffproduktion eingesetzt, entstehen elastische Dämmstoffplatten mit hohen Rückstellkräften aufgrund der Vielzahl von Bindungspunkten der Agglomeratfasern mit den Holzfasern. Der Anteil der Agglomeratfasern kann bezogen auf die Masse der eingesetzten Holzfasern bei einer Holzfeuchtigkeit von u= 7 % zwischen 5 und 80 % betragen. Die Herstellung verschiedener Dämmstoffarten mit Agglomeratfasern wird in den Beispielen 4 und 5 näher beschrieben. Beispiel 6 beschreibt den Einsatz der gekochten und refinerten Agglomerates für den Einsatz von Holzwerkstoffplatten mit höheren Dichten

### Beispiel 3: Kochereinstellungen

Temperatur: 175°C,
Überdruck: 4 bar,
Kochzeit: 5 min

### Beispiel 4: Dämmstoff im Rohdichtebereich von 60 - 120 kg/m³

Zielrohdichte 100 kg/m³
Dicke: 100 mm
Agglomeratfaseranteil von 60 % bezogen auf Holzfasermasse bei 7 % Holzfeuchte Temperatur im Durchströmungsofen zur Aktivierung der thermoplastischen Agglomeratanteile: 175 °C,
Bandgeschwindigkeit im Durchströmungsofen: 0,5 m/min
Schüttgewicht ca. 10 kg/m²

### Beispiel 5: Dämmstoff im Rohdichtebereich von 150 - 300 kg/m³

Zielrohdichte 250 kg/m³
Dicke: 5 mm
Agglomeratfaseranteil von 40 % bezogen auf Holzfasermasse bei 7 % Holzfeuchte Temperatur im Durchströmungsofen zur Aktivierung der thermoplastischen Agglomeratanteile: 175 °C,
Bandgeschwindigkeit im Durchströmungsofen: 0,5 m/min
Schüttgewicht ca. 1,25 kg/m²

### Beispiel 6: Spanplatte

Zielrohdichte ca. 650 kg/m³
Dicke: 13 mm
Agglomeratfaseranteil von 30 % bezogen auf Holzfasermasse bei 7 % Holzfeuchte Temperatur der Preßflächen in einer Etagenpresse etwa 240°C bei einem Preßzeitfaktor von 15s/mm und einem Anfangsdruck von 6 bar, für eine Zeit von ca. 80s, dann Druckabfall auf 3,5 bar für ca. 40s Druck halten, weiterer Druckabfall auf 1,5 bar halten für 70 s, dann Druckabfall.

## Patentansprüche

1. Verfahren zur Herstellung eines Fasern enthaltenden Stoffes für die Fertigung von Formteilen, bei dem einer ersten Gruppe von Fasern und/oder Partikeln ein Anteil von Kunststoffpartikeln und/oder -Fasern zugemischt wird, bei dem dem Stoff anschließend ein Bindemittel zugesetzt und zu einem Formteil unter Zufuhr von Wärme verpresst wird, wobei die Kunststoffpartikel und/oder -Fasern durch Zerkleinern und/oder Zerfasern von Rein- oder Mischkunststoff gewonnen werden, **dadurch gekennzeichnet, dass** ein Agglomerat aus Rein- oder Mischkunststoff im Scheibenrefiner zerkleinert wird, wobei dem Scheibenrefiner während des Zerkleinerungsvorgangs Wasser zugeführt wird, und die Teilchengröße der Kunststoffpartikel und//oder -Fasern annähernd der Teilchengröße der Partikel oder Fasern der ersten Gruppe entspricht.

2. Verfahren nach Anspruch 1, **dadurch gekennzeichnet, daß** ausschließlich Reinkunststoff im Scheibenrefiner zerfasert wird.

3. Verfahren nach Anspruch 1 oder 2, **dadurch gekennzeichnet, daß** die Partikel und/oder Fasern des Kunststoffs nach dem Zerkleinern getrocknet werden.

4. Verfahren nach einem der Ansprüche 1 bis 3, **dadurch gekennzeichnet, daß** die erste Gruppe der Fasern durch Zerfasern von Flachs, Hanf, Glas oder Carbonwerkstoffen gewonnen wird.

5. Verfahren nach einem der Ansprüche 1 bis 3, **dadurch gekennzeichnet, daß** die erste Gruppe von Partikeln oder Fasern durch Zerkleinern oder Zerfasern von Holz gewonnen wird.

6. Verfahren nach Anspruch 1 und 5, **dadurch gekennzeichnet, daß** Mischkunststoff- und/oder Reinkunststoffagglomerat zusammen mit Holzpartikeln in einem Scheibenrefmer zu Partikeln und/oder Fasern zerkleinert wird.

7. Verfahren nach einem der Ansprüche 1 bis 6, **dadurch gekennzeichnet, daß** im Scheibenrefiner eine gute Durchmischung von Kunststoff- und/oder Holzpartikeln und/oder Kunststoff- und Holzfasern erreicht wird.

8. Verfahren nach einem der Ansprüche 1 bis 7, **dadurch gekennzeichnet, daß** die Temperatur des zugeführten Wassers höchstens 50 °C beträgt.

9. Verfahren nach einem der Ansprüche 1 bis 7, **dadurch gekennzeichnet, daß** das Wasser über feuchte Holzpartikel dem Refiner zugeführt wird.

10. Verfahren nach einem der Ansprüche 1 bis 7, **dadurch gekennzeichnet, daß** das Wasser in gasförmigen Zustand dem Refiner zugeführt wird.

11. Verfahren nach einem der Ansprüche 1 bis 9, **dadurch gekennzeichnet, daß** die maximale Größe des Kunststoffagglomerats 40 mm beträgt.

12. Verfahren nach einem der Ansprüche 1 bis 11 **dadurch gekennzeichnet, daß** das zu zerkleinernde und/oder zu zerfasernde Material über eine Stopfschnecke dem Refiner zugeführt wird.

13. Verfahren nach einem der Ansprüche 1 bis 12, **dadurch gekennzeichnet, daß** zumindest die Agglomerat-Fraktion vor dem Zerkleinern im Refiner einem Kochprozeß unterworfen wird, und anhaftende Verunreinigungen entfernt werden.

14. Verfahren nach Anspruch 1 bis 13, **dadurch gekennzeichnet, daß** der Kochprozeß bei Temperaturen von 100° bis 180° C unter einem Überdruck von 1 bis 4 bar durchgeführt wird.

15. Verfahren nach Anspruch 13 oder 14, **dadurch gekennzeichnet, daß** die Kochzeit 3 bis 10 Minuten beträgt.

16. Verfahren nach einem der Ansprüche 1 bis 15, **dadurch gekennzeichnet, daß** die Partikel und/oder Fasern nach dem Zerkleinern auf eine gewünschte Endfeuchte in einem Heißdampfstrom getrocknet werden und der Heißdampfstrom in geschlossenem Kreislauf in das zu trocknende Gut zurückgeführt wird.

17. Verfahren nach Anspruch 16, **dadurch gekennzeichnet, daß** der Heißdampfstrom erhitzt wird, bevor er in das zu trocknende Gut zurückgeführt wird.

18. Verfahren nach einem der Ansprüche 4 bis 15, **dadurch gekennzeichnet, daß** der Mischkunststoff und/oder Reinkunststoff-Agglomerat zusammen mit Holzpartikeln in einem Scheibenrefiner zu Partikeln und/oder Fasern zerkleinert und das zerkleinerte Gut im Kreislauf mit Heißdampf getrocknet wird.

19. Verfahren nach einem der Ansprüche 1 bis 18, **dadurch gekennzeichnet, daß** das zu zerkleinernde und/oder zu zerfasernde Material über eine Stopfschnecke dem Refiner zugeführt wird.

20. Anwendung des Verfahrens nach einem der Ansprüche 1 bis 19 auf die Herstellung von Holzwerkstoffteilen, insbesondere von Holzfaserplatten, indem die Holzspäne oder Holzfasern teilweise durch Kunststoffpartikel oder -fasern aus gemahlenen Aggolomeraten aus Recyclingkunststoff ersetzt werden.

21. Anwendung des Verfahrens nach einem der Ansprüche 1 bis 19, auf die Herstellung von Dämmstoffplatten mit Holzfaseranteil.

## Claims

1. Method for producing a material comprising fibres for the manufacturing of preformed parts, in which a portion of particles and/or fibres from plastic material is admixed to a first group of fibres and/or particles, in which subsequently a binder is added to the material and it is pressed into a preformed part upon application of heat, wherein the particles and/or fibres from plastic material are obtained by crushing and/or defibration of pure or mixed plastics, **characterised in that** an agglomerate from pure or mixed plastics is crushed in the disc refiner wherein water is supplied to the disc refiner during the crushing operation, and that the particle size of the particles or fibres from plastic material approximately corresponds to the particle size of the particles or fibres of the first group.

2. Method according to claim 1, **characterised in that** only pure plastics is defibrated in the disc refiner.

3. Method according to claim 1 or 2, **characterised in that** the particles and/or fibres of the plastics arc dried after being crushed.

4. Method according to any one of claims 1 to 3, **characterised in that** the first group of fibres is obtained by defibrating flax, hemp, glass or carbonized material.

5. Method according to any one of claims 1 to 3, **characterised in that** the first group of particles or fibres is obtained by crushing or defibration of wood.

6. Method according to claim 1 and 5, **characterised in that** agglomerate of mixed and/or pure plastics, together with wood particles, is crushed to particles and/or fibres in a disc refiner.

7. Method according to any one of claims 1 to 6, **characterised in that** good mixing of particles from plastics and/or wood and/or fibres from plastics and wood is attained in the disc refiner.

8. Method according to any one of claims 1 to 7, **characterised in that** the temperature of the supplied water is at most 50°C.

9. Method according to any one of claims I to 7, **characterised in that** the water is supplied to the refiner via humid wood particles.

10. Method according to any one of claims 1 to 7, **characterised in that** the water is supplied to the refiner in a gaseous state.

11. Method according to any one of claims 1 to 9, **characterised in that** the maximum size of the plastics agglomerate is 40 mm.

12. Method according to any one of claims 1 to 11, **characterised in that** the material which is to be crushed and/or defibrated is fed to the refiner via a stuffing screw.

13. Method according to any one of claims I to 12, **characterised in that** at least the agglomerate fraction is subjected to a boiling process before it is crushed in the refiner, and adhering contaminations are removed.

14. Method according to any one of claims 1 to 13, **characterised in that** the boiling process is performed at temperatures of from 100°C to 180°C and under an excess pressure of from 1 to 4 bars.

15. Method according to claim 13 or 14, **characterised in that** the boiling time is from 3 to 10 minutes.

16. Method according to any one of claims 1 to 15, **characterised in that** the particles and/or fibres are dried to a desired final humidity after crushing in a hot steam flow and that the hot steam flow is fed back in a closed circuit into the material which is to be dried.

17. Method according to claim 16, **characterised in that** the hot steam flow is warmed up before it is guided back into the material that is to be dried.

18. Method according to any one of claims 4 to 15, **characterised in that** the mixed plastics and/or pure plastics agglomerate is crushed to particles and/or fibres in a disc refiner together with wood particles, and the crushed material is dried with hot steam in a flow circuit.

19. Method according to any one of claims 1 to 18, **characterised in that** the material which is to be crushed and/or defibrated is fed to the refiner via a stuffing screw.

20. The application of the method according to any one of claims 1 to 19 to the manufacture of wood material parts, in particular of wood fibre boards, by partly substituting the wood chips or wood fibres by particles or fibres from plastics, which stem from milled agglomerates of recycled plastics.

21. Application of the method according to any one of claims 1 to 19 on the manufacture of insulating material boards with a wood fibre content.

## Revendications

1. Procédé pour la production d'une matière contenant des fibres et destinée à la fabrication de pièces façonnées, dans lequel une fraction constituée de particules et/ou fibres de matière plastique est mélangée avec un premier groupe constitué de fibres et/ou particules, et dans lequel un liant est ensuite additionné à la matière et elle est comprimée pour former une pièce façonnée avec apport de chaleur, les particules et/ou fibres de matière plastique étant obtenues par désintégration et/ou défibrage de matière plastique pure ou mixte, **caractérisé en ce que** un agglomérat de matière plastique pure ou mixte est désintégré dans un raffineur à disques, de l'eau étant apportée au raffineur à disques pendant le processus de désintégration, et que la dimension des particules et/ou fibres de matière plastique correspond approximativement à la dimension des particules ou fibres du premier groupe.

2. Procédé selon la revendication 1, **caractérisé en ce que** de la matière plastique pure est exclusivement défibrée dans le raffineur à disques.

3. Procédé selon la revendication 1 ou 2, **caractérisé en ce que** les particules et/ou fibres de la matière plastique sont séchées après la désintégration.

4. Procédé selon l'une quelconque des revendications 1 à 3, **caractérisé en ce que** le premier groupe des fibres est obtenue par défibrage de lin, chanvre, verre ou matériaux de carbone.

5. Procédé selon l'une quelconque des revendications 1 à 3, **caractérisé en ce que** le premier groupe de particules ou fibres est obtenue par désintégration ou défibrage de bois.

6. Procédé selon la revendication 1 et 5, **caractérisé en ce que** de l'agglomérat de matière plastique pure et/ou mixte est désintégré ensemble avec des particules de bois dans un raffineur à disques pour former des particules et/ou fibres.

7. Procédé selon l'une quelconque des revendications 1 à 6, **caractérisé en ce que** un mélange intime de particules de matière plastique et/ou de bois et/ou de fibres de matière plastique et de bois est achevé dans le raffineur à disques.

8. Procédé selon l'une quelconque des revendications 1 à 7, **caractérisé en ce que** la température de l'eau apportée est au maximum 50°C.

9. Procédé selon l'une quelconque des revendications 1 à 7, **caractérisé en ce que** l'eau est apportée au raffineur à l'aide de particules de bois humides.

10. Procédé selon l'une quelconque des revendications 1 à 7, **caractérisé en ce que** l'eau est apportée au raffineur dans l'état gazeux.

11. Procédé selon l'une quelconque des revendications 1 à 9, **caractérisé en ce que** la dimension maximale de l'agglomérat de matière plastique est 40 mm.

12. Procédé selon l'une quelconque des revendications 1 à 11, **caractérisé en ce que** le matériau qu'on veut désintégrer et/ou défibrer est apporté au raffineur à travers une vis de bourrage.

13. Procédé selon l'une quelconque des revendications 1 à 12, **caractérisé en ce que** au moins la fraction d'agglomérat est soumise à un processus de cuite avant la désintégration dans le raffineur, et des impuretés adhérentes sont écartés.

14. Procédé selon l'une quelconque des revendications 1 à 13, **caractérisé en ce que** le processus de cuite est fait dans des températures de 100° à 180°C sous une pression manométrique de 1 à 4 bar.

15. Procédé selon la revendication 13 ou 14, **caractérisé en ce que** la durée de cuite est 3 à 10 minutes.

16. Procédé selon l'une quelconque des revendications 1 à 15, **caractérisé en ce que** les particules et/ou fibres sont séchés à une humidité finale souhaitée dans un courant de vapeur surchauffée après la désintégration, et que le courant de vapeur surchauffée est recyclé dans le matériau qu'on veut sécher en circuit fermé.

17. Procédé selon la revendication 16, **caractérisé en ce que** le courant de vapeur surchauffée est chauffé avant qu'il est introduit dans le matériau qu'on veut sécher.

18. Procédé selon l'une quelconque des revendications 4 à 15, **caractérisé en ce que** la matière plastique mixte et/ou l'agglomérat de matière plastique pure est désintégré à des particules et/ou fibres ensemble avec des particules de bois dans un raffineur à disques, et le matériau désintégré est séché à l'aide de vapeur surchauffée en circuit.

19. Procédé selon l'une quelconque des revendications 1 à 18, **caractérisé en ce que** le matériau qu'on veut désintégrer et/ou défibrer est apporté au raffineur à travers une vis de bourrage.

20. Utilisation du procédé selon l'une quelconque des revendications 1 à 19 à la production de pièces de matériau en bois, en particulier de panneaux de fibres, en partiellement substituant les copeaux ou fibres de bois par des particules ou fibres de matière plastique consistant d'agglomérats moulés de matière plastique recyclée.

21. Utilisation du procédé selon l'une quelconque des revendications 1 à 19 à la production de panneaux de matériau isolant avec une fraction de fibres de bois.
